# DEMANDE DE BREVET EUROPEEN

(11) **EP 4 745 916 A1**
(43) Date de publication de la demande: **20.05.2026**
(21) Numéro de dépôt: 25215439.8
(22) Date de dépôt: 13.11.2025
(51) Int. Cl.: G06V 10/82

(54) **PROCÉDÉ ET DISPOSITIF DE DÉTECTION D AU MOINS UNE IMAGE GÉNÉRÉE PAR INTELLIGENCE ARTIFICIELLE**

(30) Priorité: 13.11.2024 FR 2412364
(71) Demandeur: THALES, 92190 Meudon (FR)
(72) Inventeur: LAMPE, Rodolphe, 91767 PALAISEAU (FR); HUYNH, Cong Bang, 91767 PALAISEAU (FR)
(74) Mandataire: Lavoix

(57) **Abrégé**

La présente invention concerne un procédé (40) de détection d'au moins une image générée par intelligence artificielle, comprenant :
- une phase (42) d'entrainement comprenant les étapes suivantes :
- entrainement séparé (44) d'au moins cinq modèles distincts de détection en utilisant un premier ensemble dont chaque image est préalablement compressée selon un taux de compression aléatoire;
- application de chacun desdits au moins cinq modèles entrainés, à chaque image compressée selon un taux de compression aléatoire d'un deuxième ensemble, et obtention, en sortie d'un logit associé ;
- obtention d'un métamodèle entrainé correspondant à un outil d'apprentissage automatique entrainé avec en entrée lesdits logits ;

- une phase (48) d'inférence appliquant, ledit métamodèle entrainé, à une image test d'entrée et fournissant, en sortie, un résultat classant ladite image test comme générée par intelligence artificielle ou non.

## Description

La présente invention concerne un procédé de détection d'au moins une image générée par intelligence artificielle, le procédé étant mis en œuvre par un dispositif électronique de détection d'au moins une image générée par intelligence artificielle.

La présente invention concerne également un programme d'ordinateur comportant des instructions logicielles qui, lorsqu'elles sont exécutées par un ordinateur, mettent en œuvre un tel procédé de détection d'au moins une image générée par intelligence artificielle.

La présente invention concerne également ledit dispositif électronique de détection d'au moins une image générée par intelligence artificielle.

La présente invention s'inscrit dans le domaine du traitement d'images numériques et notamment de leur falsification via l'utilisation de l'Intelligence Artificielle (IA).

La falsification des images numériques est devenue une réalité incontournable, surtout dans le domaine de la cybercriminalité. Un nombre croissant de fausses images ou d'images falsifiées (de l'anglais *deepfake*) via l'utilisation de l'Intelligence Artificielle (IA) sont utilisées sur les réseaux sociaux et alimentent les fausses informations (de l'anglais *fake news*). Ces modifications peuvent être relativement anodines (e.g. retoucher l'apparence d'une personne pour lui enlever des imperfections cutanées), dérangeantes (e.g. faire disparaître les défauts d'un objet en vente en ligne) ou bien avoir de graves répercussions sociales, avec notamment des effets néfastes sur les réseaux sociaux, (e.g. montage présentant la rencontre improbable de personnalités politiques).

Les images falsifiées ou générées par des techniques d'intelligence artificielle, sont aussi utilisées par exemple pour créer un faux discours d'un responsable politique ou de fausses opérations.

Autrement dit, la diffusion de telles images falsifiées ou générées par des techniques d'intelligence artificielle constitue une nouvelle menace technologique, et leur détection efficace est nécessaire, d'un point de vue cyber sécurité, pour limiter des conséquences graves dans le civil voire au-delà.

Plusieurs modèles de détections des images générées par l'IA ont été développés pendant ces dernières années. Par exemple, il y a le modèle DNF, tel que décrit par Zhang, Yichi, et al. dans l'article intitulé « Diffusion noise feature: Accurate and fast generated image detection » de 2023, ou le modèle SSP tel que décrit par Chen, Jiaxuan, et al. dans l'article intitulé « A single simple patch is all you need for ai-generated image detection » de 2024, ou encore le modèle DCT tel que décrit par Corvi, Riccardo, et al. dans l'article intitulé « Intriguing properties of synthetic images: from generative adversarial networks to diffusion models » de 2023, ou encore le modèle CLIP tel que décrit par Cozzolino, Davide, et al. dans l'article intitulé « Raising the Bar of AI-generated Image Detection with CLIP » de 2024.

Chacun de ces modèles de détection d'image présente certes séparément des avantages, mais également des inconvénients, tels qu'un sur-apprentissage dû aux artefacts propres à chaque modèle, un sur-apprentissage de la distribution de l'ensemble d'images d'entrainement, un sur-apprentissage des biais de compression au format JPEG (de l'anglais *Joint Photographic Experts Group*) utilisés dans l'ensemble d'images d'entrainement, un sur-apprentissage sémantique, un biais colorimétrique.

Actuellement, il est possible de réduire un des inconvénients précités, tel que le sur-apprentissage dû aux artefacts du modèle utilisé, ou encore limiter le sur-apprentissage sur les biais de compression JPEG pour un autre modèle, mais pas les deux à la fois, et aucun modèle ne permet de réduire efficacement l'ensemble des inconvénients précités.

Le but de l'invention est alors d'améliorer la détection des images générées (i.e. falsifiées) par intelligence artificielle en réduisant davantage les inconvénients précités des techniques de l'état de la technique actuel.

A cet effet, l'invention a pour objet un procédé de détection d'au moins une image générée par intelligence artificielle, le procédé étant mis en œuvre par un dispositif électronique de détection d'au moins une image générée par intelligence artificielle, et comprenant :
- une phase d'entrainement comprenant les étapes suivantes :
   - entrainement séparé d'au moins cinq modèles distincts de détection d'au moins une image générée par intelligence artificielle, en utilisant, pour chacun desdits entrainements séparés desdits au moins cinq modèles distincts, un même premier ensemble d'images d'entrainement, chaque image dudit premier ensemble d'images d'entrainement étant, avant d'être utilisée en entrée de chacun desdits au moins cinq modèles distincts, compressée selon un taux de compression sélectionné aléatoirement au sein d'une liste de taux de compression prédéterminés ;
   - compression de chaque image d'un deuxième ensemble d'images d'entrainement, selon un taux de compression sélectionné aléatoirement au sein de ladite liste de taux de compression prédéterminés ;
   - application de chacun desdits au moins cinq modèles entrainés, à chaque image compressée dudit deuxième ensemble d'images d'entrainement, et obtention, en sortie de chacun desdits au moins cinq modèles entrainés, d'un logit associé ;
   - obtention d'un métamodèle entrainé correspondant à un outil d'apprentissage automatique entrainé en utilisant, en entrée, pour chaque image compressée dudit deuxième ensemble d'images d'entrainement, lesdits logits correspondants de sortie desdits au moins cinq modèles entrainés ;
   - une phase d'inférence appliquant, ledit métamodèle entrainé, à une image test d'entrée et propre à fournir, en sortie, un résultat de détection classant ladite image test comme générée par intelligence artificielle ou non.

Ainsi, la présente invention propose d'entrainer tout d'abord séparément au moins cinq modèles de détection d'au moins une image générée par intelligence artificielle, en utilisant en entrée, pour chacun de ces au moins cinq modèles distincts, un premier ensemble d'images d'entrainement dont chaque image est au préalable compressée selon un taux de compression sélectionné aléatoirement au sein d'une liste de taux de compression prédéterminée.

Une fois ces cinq modèles entrainés, ils sont combinés au sein d'un métamodèle. Pour ce faire, un deuxième ensemble d'images d'entrainement est utilisé et chacune des images de ce deuxième ensemble d'images d'entrainement est compressée selon un taux de compression sélectionné aléatoirement au sein de la liste de taux de compression prédéterminée.

Chaque image du deuxième ensemble d'images d'entrainement ainsi compressée est utilisée en entrée des cinq modèles entrainés. Chacun des au moins cinq modèles entrainés fournit en sortie un logit associé à ladite image compressée.

Autrement dit, pour une image compressée du deuxième ensemble d'images d'entrainement, on obtient au moins cinq logits.

Le métamodèle selon la présente invention est ensuite entraîné en utilisant, en entrée d'un outil d'apprentissage automatique, pour chaque image compressée du deuxième ensemble d'images d'entrainement, les logits associés à ladite image compressée considérée.

Un tel métamodèle entraîné limite les sur-apprentissages précités, car il combine ainsi les avantages des au moins cinq modèles, préalablement entrainés séparément avec un premier ensemble d'image d'entrainement, en utilisant astucieusement uniquement leur logit de sortie, lorsqu'ils sont appliqués à un deuxième ensemble d'images d'entrainement (avec lequel ils n'ont pas été entrainés), en tant qu'entrée d'entrainement d'un autre outil d'apprentissage automatique.

Un tel métamodèle est par ailleurs en outre plus robuste, lors de l'inférence, aux images compressées, puisque son entrainement a été effectué en considérant des images d'entrainement dont le taux de compression a été choisi au hasard, ce qui augmente la variété des ensembles d'images d'entrainement (de l'anglais *dataset*).

Suivant d'autres aspects avantageux de l'invention, le procédé de détection d'au moins une image générée par intelligence artificielle comprend une ou plusieurs des caractéristiques suivantes, prises isolément ou suivant toutes les combinaisons techniquement possibles :
- chacune des images dudit premier ensemble d'images d'entrainement et dudit deuxième ensemble d'images d'entrainement est au format JPEG, et dans lequel ladite liste de taux de compression comprend l'ensemble de taux de compression suivant : 40%, 50%, 60%, 70% et 96% ;
- lesdits au moins cinq modèles distincts de détection d'au moins une image générée par intelligence artificielle appartiennent au groupe comprenant au moins :
   - le modèle DNF basé sur la caractéristique de bruit de diffusion ;
   - le modèle SSP basé sur un patch simple et unique ;
   - le modèle DCT basé sur la transformée en cosinus discret ;
   - le modèle CLIP basé sur un pré-entraînement contrastif langage-image ;
   - un modèle NF sans extraction de caractéristique ;
   - un modèle DINO d'autodistillation sans étiquette.
- ledit premier ensemble d'images d'entrainement et ledit deuxième ensemble d'images d'entrainement sont distincts ;
- ledit premier ensemble d'images d'entrainement est l'ensemble d'images d'entrainement Genlmage ;
- ledit deuxième ensemble d'images d'entrainement est l'ensemble d'images d'entrainement Synthbuster ;
- ledit outil d'apprentissage automatique est un modèle de renforcement appelé boosting de gradient ;
- ledit outil d'apprentissage automatique est une forêt d'arbres de décision.

L'invention concerne également un programme d'ordinateur comportant des instructions logicielles qui, lorsqu'elles sont exécutées par un ordinateur, mettent en œuvre un procédé de détection d'au moins une image générée par intelligence artificielle tel que défini ci-dessus.

L'invention concerne également un dispositif électronique de détection d'au moins une image générée par intelligence artificielle, le dispositif électronique étant configuré pour mettre en œuvre un procédé de détection d'au moins une image générée par intelligence artificielle tel que défini ci-dessus.

L'invention apparaîtra plus clairement à la lecture de la description qui va suivre, donnée uniquement à titre d'exemple non limitatif, et faite en référence aux dessins dans lesquels :
[Fig. 1] la figure 1 est une représentation schématique d'un dispositif électronique de détection d'au moins une image générée par intelligence artificielle selon la présente invention;
[Fig. 2] la figure 2 est un organigramme général du procédé de détection d'au moins une image générée par intelligence artificielle selon la présente invention;
[Fig. 3] [Fig. 4] les figures 3 et 4 illustrent respectivement chacune deux des étapes d'entrainement dudit procédé.

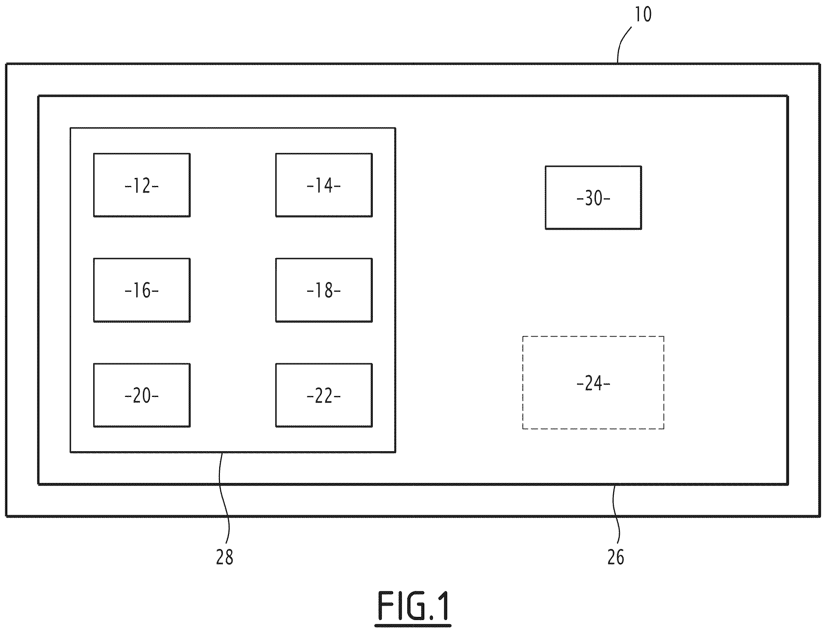

La figure 1 illustre tout d'abord schématiquement un exemple non limitatif d'un dispositif électronique 10 de détection d'au moins une image générée par intelligence artificielle selon la présente invention.

Selon la présente invention, le dispositif électronique 10 de détection comprend tout d'abord un module 12 de stockage configuré pour stocker :
- au moins cinq modèles distincts à entrainer de détection d'au moins une image générée par intelligence artificielle ;
- ledit premier ensemble d'images d'entrainement et ledit deuxième ensemble d'images d'entrainement ;
- ladite liste de taux de compression ;
- ledit outil d'apprentissage automatique à entrainer.

En complément facultatif, lequel lesdits au moins cinq modèles distincts de détection d'au moins une image générée par intelligence artificielle appartiennent au groupe comprenant au moins :
- le modèle DNF basé sur la caractéristique de bruit de diffusion ;
- le modèle SSP basé sur un patch simple et unique ;
- le modèle DCT basé sur la transformée en cosinus discret ;
- le modèle CLIP basé sur un pré-entraînement contrastif langage-image ;
- un modèle NF sans extraction de caractéristique ;
- un modèle DINO d'autodistillation sans étiquette.

Le dispositif électronique 10 de détection comprend également un module 14 de compression configuré pour compresser chacune des images du premier ensemble d'images d'entrainement et du deuxième ensemble d'images d'entrainement un taux de compression sélectionné aléatoirement au sein de ladite liste de taux de compression prédéterminés.

En complément facultatif, chacune des images dudit premier ensemble d'images d'entrainement et dudit deuxième ensemble d'images d'entrainement est au format JPEG, et dans lequel ladite liste de taux de compression comprend l'ensemble de taux de compression suivant: 40%, 50%, 60%, 70% et 96%. A noter que plus le taux de compression est petit plus l'image est compressée. Autrement dit, une image compressée avec un taux de 40% est plus compressée qu'une image compressée avec un taux de 96%.

En complément facultatif, ledit premier ensemble d'images d'entrainement et ledit deuxième ensemble d'images d'entrainement sont distincts, ce qui permet avantageusement de fournir de la variété dans les ensembles de données (de l'anglais dataset) d'entrainement.

Selon un exemple de ce complément facultatif, ledit premier ensemble d'images d'entrainement est l'ensemble d'images d'entrainement Genlmage tel que notamment cité par M. Zhu et al. dans l'article intitulé « *GenImage: A Million-Scale Benchmark for Detecting AI-Generated Image*», tandis que ledit deuxième ensemble d'images d'entrainement est l'ensemble d'images d'entrainement Synthbuster tel que notamment cité par Q. Bammey dans l'article intitulé « *Synthbuster : Towards Detection of Diffusion Model Generated Images* ».

Le dispositif électronique 10 de détection comprend également un module 16 d'entrainement séparé propre à entrainer séparément chacun desdits au moins cinq modèles distincts de détection d'au moins une image générée par intelligence artificielle, en utilisant, pour chacun desdits entrainements séparés, un même premier ensemble d'images d'entrainement, chaque image dudit premier ensemble d'images d'entrainement étant, avant d'être utilisée en entrée de chacun desdits au moins cinq modèles distincts, compressée, via ledit module de compression 14, selon un taux de compression sélectionné aléatoirement au sein d'une liste de taux de compression prédéterminés.

Le dispositif électronique 10 de détection comprend également un module 18 d'application, configuré pour appliquer, chacun des au moins cinq modèles entrainés, fournis en sortie par le module 16 d'entrainement séparé, à chaque image compressée dudit deuxième ensemble d'images d'entrainement fournie par ledit module de compression.

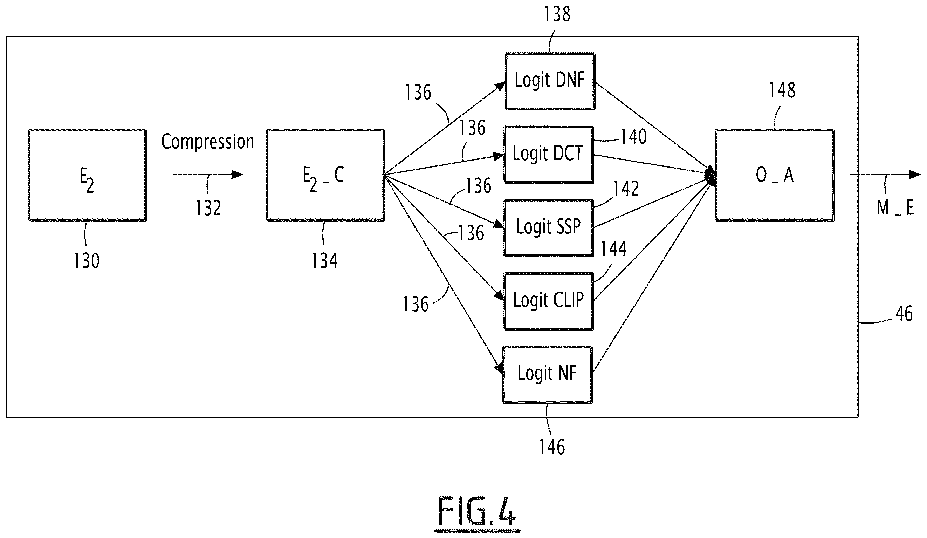

Comme illustré par la suite par la figure 4, le module 18 est configuré pour fournir en sortie, pour chaque image compressée du deuxième ensemble d'images d'entrainement, les logits associés à ladite image compressée considérée, chaque logit étant fournis par un desdits au moins cinq modèles entrainés.

Le dispositif électronique 10 de détection comprend également un module 20 d'obtention, configuré pour obtenir un métamodèle entrainé, ledit métamodèle correspondant à (i.e. étant) l'outil d'apprentissage automatique entrainé en utilisant, en entrée, pour chaque image compressée dudit deuxième ensemble d'images d'entrainement, lesdits logits correspondants de sortie desdits au moins cinq modèles entrainés.

Selon une première variante, ledit outil d'apprentissage automatique est un modèle de renforcement appelé boosting de gradient (de l'anglais *Gradient Boosting*).

Selon une autre variante, ledit outil d'apprentissage automatique est une forêt d'arbres de décision (de l'anglais *Random Forest*).

Le dispositif électronique 10 de détection comprend également un module 22 configuré pour mettre en œuvre une phase d'inférence en appliquant, ledit métamodèle entrainé fourni par le module 20 d'obtention, à une image test d'entrée et propre à fournir, en sortie, un résultat de détection classant ladite image test comme générée par intelligence artificielle ou non.

En complément optionnel, le dispositif électronique 10 de détection comprend également un module 24 de restitution configuré pour restituer ledit résultat de détection classant ladite image test comme générée par intelligence artificielle ou non, via une restitution sonore, et/ou par affichage sur un écran, et/ou par transmission à un autre dispositif (non représenté) distinct dudit dispositif 10 de détection.

Dans l'exemple de la figure 1, le dispositif électronique de détection d'au moins une image générée par intelligence artificielle comprend une unité de traitement d'informations 26 formée par exemple d'une mémoire 28 et d'un processeur 30 associé à la mémoire 28.

Dans l'exemple de la figure 1, le module 12 de stockage, le module 14 de compression, le module 16 d'entrainement séparé desdits au moins cinq modèles distincts de détection, le module 18 d'application, le module 20 d'obtention, le module 22 configuré pour mettre en œuvre une phase d'inférence, ainsi qu'en complément facultatif le module de restitution, sont réalisés chacun sous forme d'un logiciel, ou d'une brique logicielle, exécutable par le processeur. La mémoire du dispositif électronique de détection d'au moins une image générée par intelligence artificielle est alors apte à stocker un logiciel de stockage, un logiciel de compression, un logiciel d'entrainement séparé, un logiciel d'application, un logiciel d'obtention, et un logiciel de mise en œuvre de phase d'inférence, ainsi qu'en complément facultatif un logiciel de restitution. Le processeur est alors apte à exécuter chacun des logiciels parmi le logiciel de stockage, le logiciel de compression, le logiciel d'entrainement séparé, le logiciel d'application, le logiciel d'obtention, et le logiciel de mise en œuvre de phase d'inférence, ainsi qu'en complément facultatif le logiciel de restitution.

En variante non représentée, le module de stockage, le module de compression, le module d'entrainement séparé, le module d'application, le module d'obtention, et le module de mise en œuvre de phase d'inférence, ainsi qu'en complément facultatif le module de restitution, sont réalisés chacun sous forme d'un composant logique programmable, tel qu'un FPGA (de l'anglais *Field Programmable Gate Array*), ou encore d'un circuit intégré, tel qu'un ASIC (de l'anglais *Application Specific Integrated Circuit*).

Lorsque le dispositif électronique de détection d'au moins une image générée par intelligence artificielle est réalisé sous forme d'un ou plusieurs logiciels, c'est-à-dire sous forme d'un programme d'ordinateur, également appelé produit programme d'ordinateur, il est en outre apte à être enregistré sur un support, non représenté, lisible par ordinateur. Le support lisible par ordinateur est par exemple un medium apte à mémoriser des instructions électroniques et à être couplé à un bus d'un système informatique. A titre d'exemple, le support lisible est un disque optique, un disque magnéto-optique, une mémoire ROM, une mémoire RAM, tout type de mémoire non-volatile (par exemple FLASH ou NVRAM) ou une carte magnétique. Sur le support lisible est alors mémorisé un programme d'ordinateur comprenant des instructions logicielles.

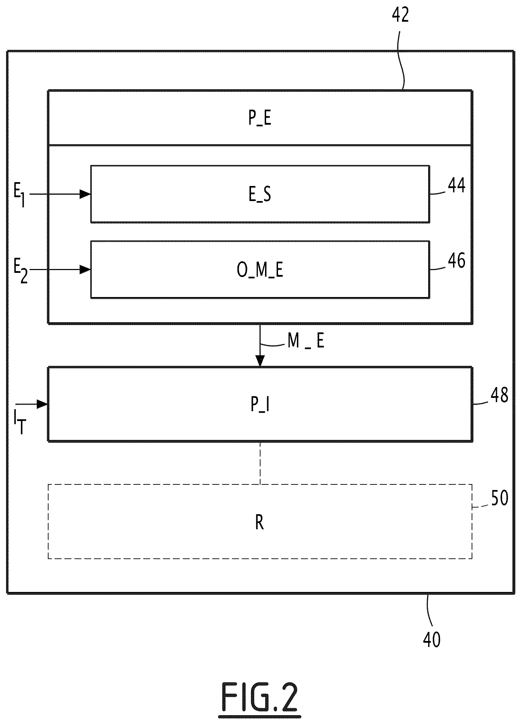

On décrit par la suite en relation avec la figure 2, un exemple de mode de réalisation général du fonctionnement du dispositif électronique de détection d'au moins une image générée par intelligence artificielle de la figure 1.

Plus précisément, le procédé 40 de détection d'au moins une image générée par intelligence artificielle comprend tout d'abord phase 42 d'entrainement P_E.

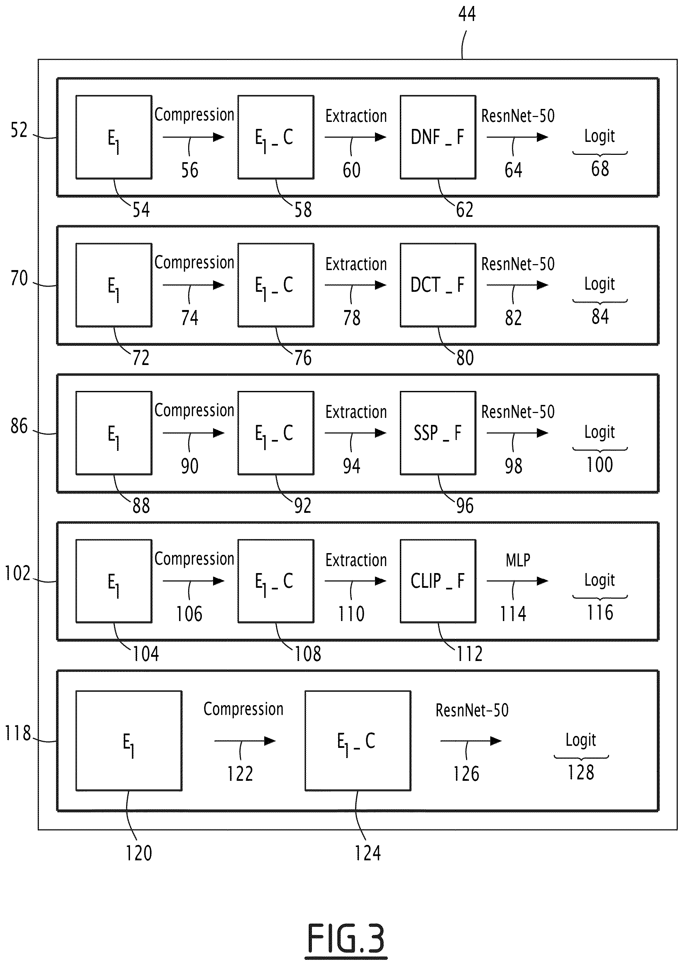

Cette phase d'entrainement P_E comprend elle-même deux ensembles 44 et 46 d'étapes distinctes, décrit par la suite chacun plus en détail respectivement en relation avec les figures 3 et 4.

Le premier ensemble 44 d'étapes correspond à (i.e. est) l'entrainement séparé E_S d'au moins cinq modèles distincts de détection d'au moins une image générée par intelligence artificielle, en utilisant, pour chacun desdits entrainements séparés desdits au moins cinq modèles distincts, un même premier ensemble E₁ d'images d'entrainement, chaque image dudit premier ensemble d'images d'entrainement étant, avant d'être utilisée en entrée de chacun desdits au moins cinq modèles distincts, compressée selon un taux de compression sélectionné aléatoirement au sein d'une liste de taux de compression prédéterminés.

Le deuxième ensemble 46 est un ensemble d'étapes aboutissant à l'obtention O_M_E d'un métamodèle entrainé M_E.

Le deuxième ensemble 46 est mis en œuvre après la mise en œuvre 44 de l'entrainement séparé E_S d'au moins cinq modèles distincts de détection, et comprend comme illustré par la suite en relation avec la figure 4, la compression de chaque image d'un deuxième ensemble d'images d'entrainement E₂, selon un taux de compression sélectionné aléatoirement au sein de ladite liste de taux de compression prédéterminés ; puis l'application de chacun desdits au moins cinq modèles entrainés, à chaque image compressée dudit deuxième ensemble d'images d'entrainement, et l'obtention, en sortie de chacun desdits au moins cinq modèles entrainés, d'un logit associé ; puis l'obtention, en tant que telle, d'un métamodèle entrainé M-E correspondant à un outil d'apprentissage automatique entrainé en utilisant, en entrée, pour chaque image compressée dudit deuxième ensemble d'images d'entrainement, lesdits logits correspondants de sortie desdits au moins cinq modèles entrainés.

Une fois le métamodèle entrainé M_E obtenu, le procédé 40 comprend une phase 48 d'inférence P_I appliquant, ledit métamodèle entrainé M_E, à une image test I_{T} d'entrée et propre à fournir, en sortie, un résultat de détection classant (i.e. binairement) ladite image test comme générée par intelligence artificielle ou non.

Plus précisément, lors de cette phase 48 d'inférence, image test I_{T} d'entrée est reçue, puis chacun desdits au moins cinq modèles entrainés lui sont appliqués, pour obtenir en sortie de chacun desdits au moins cinq modèles entrainés, un logit associé. Lesdits au moins cinq logits associés sont ensuite utilisés en entrée du métamodèle entrainé M_E qui fournit alors en sortie un résultat de détection classant ladite image test comme générée par intelligence artificielle ou non. Par exemple ce résultat est également un logit (i.e. une valeur de régression logistique) à savoir une valeur réelle, un logit positif étant par exemple représentatif d'une image générée (i.e. falsifiée, deepfake) par intelligence artificielle, tandis que selon le même exemple, un logit négatif est représentatif d'une image authentique (i.e. non générée ou falsifiée par intelligence artificielle).

En complément optionnel, illustré par l'exemple de la figure 2, le procédé 40 comprend une étape 50 de restitution R dudit résultat, via une restitution sonore, et/ou par affichage sur un écran, et/ou par transmission à un autre dispositif distinct dudit dispositif 10 de détection mettant en œuvre ledit procédé 40.

Une telle restitution pouvant optionnellement être accompagnée d'une alerte ou une étape de blocage de la diffusion d'une telle image « deepfake » une fois détectée comme telle.

La figure 3 illustre un exemple d'un premier ensemble 44 d'étapes d'entrainement séparé E_S d'au moins cinq modèles distincts de détection.

Selon cet exemple de la figure 3, cinq modèles distincts de détection d'au moins une image générée par intelligence artificielle sont entrainés séparément selon cinq étapes distinctes et indépendantes.

Plus précisément, le premier ensemble 44 d'étapes d'entrainement séparé E_S comprend une étape 52 d'entrainement d'un modèle de détection d'au moins une image générée par intelligence artificielle correspondant au (i.e. étant le, identique au) modèle DNF basé sur la caractéristique de bruit de diffusion, tel qu'introduit par Zhang, Yichi, et al. dans l'article précité intitulé : « Diffusion noise feature: Accurate and fast generated image detection » de 2023.

Pour ce faire, l'étape 52 comprend les sous-étapes 54, 56, 58, 60, 62 et 64. La sous-étape 54 est une sous-étape de récupération du premier ensemble E₁ d'images d'entrainement, stocké au sein du module de stockage 12 de la figure 1.

Le premier ensemble E₁ d'images d'entrainement est utilisé en commun pour entrainer séparément chacun desdits au moins cinq modèles distincts de détection.

En complément optionnel, ledit premier ensemble E₁ d'images d'entrainement est l'ensemble d'images d'entrainement Genlmage.

Selon la sous-étape 56, chaque image du premier ensemble E₁ d'images d'entrainement est compressée selon un taux de compression sélectionné aléatoirement au sein d'une liste de taux de compression prédéterminés.

En complément facultatif, chacune des images dudit premier ensemble E₁ d'images d'entrainement et dudit deuxième ensemble d'images d'entrainement est au format JPEG, et dans lequel ladite liste de taux de compression comprend l'ensemble de taux de compression suivant : 40%, 50%, 60%, 70% et 96%.

A l'issue de la sous-étape 56, on obtient selon la sous-étape 58, un ensemble E₁_C d'images d'entrainement compressées.

Selon la sous-étape 60, une extraction de caractéristique 62 (de l'anglais *feature*) de bruit de diffusion DNF (de l'anglais *Diffusion Noise Feature*) est mise en œuvre à partir de chaque image compressée dudit ensemble E₁_C d'images d'entrainement compressées, puis lesdites caractéristiques DNF_F extraites sont utilisées, selon la sous-étape 64, en entrée de l'outil d'apprentissage ResNet-50 tel qu'introduit par H. Kaiming, et al. dans l'article intitulé : « Deep Residual Learning for Image Recognition » de 2015, qui fournit en sortie un logit 68 (i.e. une valeur de régression logistique) associé à chaque image d'entrainement source du premier ensemble E₁.

Par la suite, par « Logit » on entend une valeur réelle, un logit positif étant par exemple représentatif d'une image générée (i.e. falsifiée, *deepfake*) par intelligence artificielle, tandis que selon le même exemple, un logit négatif est représentatif d'une image authentique (i.e. non générée ou falsifiée par intelligence artificielle). Autrement dit, le signe du logit permet de classer une image numérique en tant que *deepfake* ou non.

A l'issue de l'étape 52, le modèle DNF basé sur la caractéristique de bruit de diffusion est entrainé lorsque l'ensemble des images dudit premier ensemble E₁ d'images d'entrainement a été utilisé, de sorte que l'utilisation du modèle DNF atteigne un taux de réussite prédéterminé, par exemple de l'ordre de 84%, pour reconnaitre les images dudit premier ensemble E₁ d'images d'entrainement qui sont bien des *deepfake* (i.e. générée ou falsifiée via une intelligence artificielle) de celles qui ne le sont pas, la « vérité » associée à chacune de ces images d'entrainement étant connue.

Le premier ensemble 44 d'étapes d'entrainement séparé E_S comprend une autre étape 70 d'entrainement d'un autre modèle de détection, distinct du modèle DNF basé sur la caractéristique de bruit de diffusion, à savoir selon l'exemple de la figure 3, le modèle DCT basé sur la transformée en cosinus discret tel que décrit par Corvi, Riccardo, et al. dans l'article intitulé « Intriguing properties of synthetic images: from generative adversarial networks to diffusion models » de 2023.

Pour ce faire, l'étape 70 comprend les sous-étapes 72, 74, 76, 78, 80 et 82. La sous-étape 72 est une sous-étape de récupération du premier ensemble E₁ d'images d'entrainement, stocké au sein du module de stockage 12 de la figure 1.

Selon la sous-étape 74, chaque image du premier ensemble E₁ d'images d'entrainement est compressée selon un taux de compression sélectionné aléatoirement au sein de la liste de taux de compression prédéterminés (comprenant notamment l'ensemble de taux de compression suivant : 40%, 50%, 60%, 70% et 96%), le taux étant aléatoirement identique ou non à celui qui est utilisé, selon la sous-étape 56, dans l'entrainement séparé 52 du modèle DNF basé sur la caractéristique de bruit de diffusion.

Autrement dit, la même image du premier ensemble E₁ est, selon un premier exemple, compressée, selon l'étape 56, avec un taux de compression de 40% tandis que cette image est compressée séparément, selon l'étape 74 avec un taux de compression de 60%, les taux des étapes 56 et 74 étant sélectionnés aléatoirement (i.e. au hasard) dans la même liste de taux de compression prédéterminés.

Selon un deuxième exemple, la même image du premier ensemble E₁ est compressée, selon l'étape 56, avec un taux de compression de 50% tandis que cette image est compressée séparément, selon l'étape 74, avec un taux de compression de 96%. Les taux des étapes 56 et 74 étant sélectionnés aléatoirement (i.e. au hasard) dans la même liste de taux de compression prédéterminés.

Selon un troisième exemple, la même image du premier ensemble E₁ est selon un premier exemple compressé, selon l'étape 56, avec un taux de compression de 70%, et aléatoirement, identiquement selon l'étape 74. Les taux des étapes 56 et 74 étant sélectionnés aléatoirement (i.e. au hasard) dans la même liste de taux de compression prédéterminés.

A l'issue de la sous-étape 74, on obtient selon la sous-étape 76, un ensemble E₁_C d'images d'entrainement compressées aléatoirement.

Selon la sous-étape 78, une extraction de caractéristique 80 DCT basé sur la transformée en cosinus discret (de l'anglais *Discrete Cosine Transform*) est mise en œuvre à partir de chaque image compressée dudit ensemble E₁_C d'images d'entrainement compressées, puis lesdites caractéristiques DCT_F extraites sont utilisées, selon la sous-étape 82, en entrée de l'outil d'apprentissage ResNet-50 précité, qui fournit en sortie un logit 84 (i.e. une valeur de régression logistique) associé à chaque image d'entrainement source du premier ensemble E₁.

A l'issue de l'étape 70, le modèle DCT basé sur la transformée en cosinus discret est entrainé lorsque l'ensemble des images dudit premier ensemble E₁ d'images d'entrainement a été utilisé, de sorte que l'utilisation du modèle DCT atteigne un taux de réussite prédéterminé, par exemple de l'ordre de 76%, pour reconnaitre les images dudit premier ensemble E₁ d'images d'entrainement qui sont bien des *deepfake* (i.e. générée ou falsifiée via une intelligence artificielle) de celles qui ne le sont pas, la « vérité » associée à chacune de ces images d'entrainement étant connue.

Le premier ensemble 44 d'étapes d'entrainement séparé E_S comprend une autre étape 86 d'entrainement d'un autre modèle de détection, distinct du modèle DNF basé sur la caractéristique de bruit de diffusion et distinct du modèle DCT basé sur la transformée en cosinus discret, à savoir selon l'exemple de la figure 3, le modèle SSP basé sur un patch simple et unique tel que décrit par Chen, Jiaxuan, et al. dans l'article intitulé « A single simple patch is all you need for ai-generated image detection » de 2024.

Pour ce faire, l'étape 86 comprend les sous-étapes 88, 90, 92, 94, 96 et 98. La sous-étape 88 est une sous-étape de récupération du premier ensemble E₁ d'images d'entrainement, stocké au sein du module de stockage 12 de la figure 1.

Selon la sous-étape 90, chaque image du premier ensemble E₁ d'images d'entrainement est compressée selon un taux de compression sélectionné aléatoirement au sein de la liste de taux de compression prédéterminés (comprenant notamment l'ensemble de taux de compression suivant : 40%, 50%, 60%, 70% et 96%), le taux étant aléatoirement identique ou non à celui qui est utilisé respectivement, selon les sous-étapes 56 ou 74, dans l'entrainement séparé 52 du modèle DNF basé sur la caractéristique de bruit de diffusion ou dans l'entrainement séparé 70 du modèle DCT basé sur la transformée en cosinus discret.

A l'issue de la sous-étape 90, on obtient selon la sous-étape 92, un ensemble E₁_C d'images d'entrainement compressées aléatoirement.

Selon la sous-étape 94, une extraction de caractéristique 96 SSP basé sur un patch simple et unique (de l'anglais *Single Simple Patch*) est mise en œuvre à partir de chaque image compressée dudit ensemble E₁_C d'images d'entrainement compressées, puis lesdites caractéristiques SSP_F extraites sont utilisées, selon la sous-étape 98, en entrée de l'outil d'apprentissage ResNet-50 précité, qui fournit en sortie un logit 100 (i.e. une valeur de régression logistique) associé à chaque image d'entrainement source du premier ensemble E₁.

A l'issue de l'étape 86, le modèle SSP basé sur un patch simple et unique est entrainé lorsque l'ensemble des images dudit premier ensemble E₁ d'images d'entrainement a été utilisé, de sorte que l'utilisation du modèle SSP atteigne un taux de réussite prédéterminé, par exemple de l'ordre de 79%, pour reconnaitre les images dudit premier ensemble E₁ d'images d'entrainement qui sont bien des *deepfake* (i.e. générée ou falsifiée via une intelligence artificielle) de celles qui ne le sont pas, la « vérité » associée à chacune de ces images d'entrainement étant connue.

Le premier ensemble 44 d'étapes d'entrainement séparé E_S comprend une autre étape 102 d'entrainement d'un autre modèle de détection, distinct des modèles DNF, DCT et SSP, à savoir selon l'exemple de la figure 3, le modèle CLIP basé sur un pré-entraînement contrastif langage-image (de l'anglais *Contrastive Language-Image Pre-Training*) tel que décrit par tel que décrit par Cozzolino, Davide, et al. dans l'article intitulé « Raising the Bar of AI-generated Image Detection with CLIP » de 2024.

Pour ce faire, l'étape 102 comprend les sous-étapes 104, 106, 108, 110, 112 et 114. La sous-étape 104 est une sous-étape de récupération du premier ensemble E₁ d'images d'entrainement, stocké au sein du module de stockage 12 de la figure 1.

Selon la sous-étape 106, chaque image du premier ensemble E₁ d'images d'entrainement est compressée selon un taux de compression sélectionné aléatoirement au sein de la liste de taux de compression prédéterminés (comprenant notamment l'ensemble de taux de compression suivant : 40%, 50%, 60%, 70% et 96%), le taux étant aléatoirement identique ou non à celui qui est utilisé respectivement, selon les sous-étapes 56 ou 74 ou 90, dans les entrainements séparés 52, 70, 86 respectivement des modèles DNF, DCT et SSP.

A l'issue de la sous-étape 106, on obtient selon la sous-étape 108, un ensemble E₁_C d'images d'entrainement compressées aléatoirement.

Selon la sous-étape 110, une extraction de caractéristique 112 CLIP basé sur un pré-entraînement contrastif langage-image est mise en œuvre à partir de chaque image compressée dudit ensemble E₁_C d'images d'entrainement compressées, puis lesdites caractéristiques CLIP_F extraites sont utilisées, selon la sous-étape 114, en entrée d'un perceptron multicouche MLP (de l'anglais Multi-Layered Perceptron), qui fournit en sortie un logit 116 (i.e. une valeur de régression logistique) associé à chaque image d'entrainement source du premier ensemble E₁.

A l'issue de l'étape 102, le modèle CLIP basé sur un pré-entraînement contrastif langage-image est entrainé lorsque l'ensemble des images dudit premier ensemble E₁ d'images d'entrainement a été utilisé, de sorte que l'utilisation du modèle CLIP atteigne un taux de réussite prédéterminé, par exemple de l'ordre de 88%, pour reconnaitre les images dudit premier ensemble E₁ d'images d'entrainement qui sont bien des *deepfake* (i.e. générée ou falsifiée via une intelligence artificielle) de celles qui ne le sont pas, la « vérité » associée à chacune de ces images d'entrainement étant connue.

Le premier ensemble 44 d'étapes d'entrainement séparé E_S comprend une autre étape 118 d'entrainement d'un autre modèle de détection, distinct des modèles DNF, DCT, SSP et CLIP, à savoir selon l'exemple de la figure 3, le modèle NF sans extraction de caractéristique (de l'anglais *Non Feature*) par rapport aux modèles précédemment décrits DNF, DCT, SSP et CLIP.

Pour ce faire, l'étape 118 comprend les sous-étapes 120, 122, 124 et 126. La sous-étape 118 est une sous-étape de récupération du premier ensemble E₁ d'images d'entrainement, stocké au sein du module de stockage 12 de la figure 1.

Selon la sous-étape 122, chaque image du premier ensemble E₁ d'images d'entrainement est compressée selon un taux de compression sélectionné aléatoirement au sein de la liste de taux de compression prédéterminés (comprenant notamment l'ensemble de taux de compression suivant : 40%, 50%, 60%, 70% et 96%), le taux étant aléatoirement identique ou non à celui qui est utilisé respectivement, selon les sous-étapes 56 ou 74 ou 90 ou encore 106, dans les entrainements séparés 52, 70, 86 et 118 respectivement des modèles DNF, DCT et SSP.

A l'issue de la sous-étape 122, on obtient selon la sous-étape 124, un ensemble E₁_C d'images d'entrainement compressées aléatoirement.

Selon la sous-étape 126, chaque image compressée dudit ensemble E₁_C d'images d'entrainement compressées est ensuite utilisée directement (i.e. sans extraction de caractéristique) en entrée de l'outil d'apprentissage ResNet-50 précité, qui fournit en sortie un logit 128 (i.e. une valeur de régression logistique) associé à chaque image d'entrainement source du premier ensemble E₁.

A l'issue de l'étape 126, le modèle NF sans extraction de caractéristique est entrainé lorsque l'ensemble des images dudit premier ensemble E₁ d'images d'entrainement a été utilisé, de sorte que l'utilisation du modèle NF entrainé atteigne un taux de réussite prédéterminé, par exemple de l'ordre de 79%, pour reconnaitre les images dudit premier ensemble E₁ d'images d'entrainement qui sont bien des *deepfake* (i.e. générée ou falsifiée via une intelligence artificielle) de celles qui ne le sont pas, la « vérité » associée à chacune de ces images d'entrainement étant connue.

Les étapes 52, 70, 86, 102 et 118 sont mises en œuvre indépendamment les unes des autres. Ces étapes peuvent être mises en œuvre parallèlement, ou successivement selon un ordre quelconque, ou de manière espacée dans le temps, ou encore avec mise en œuvre de deux étapes parallèlement, puis deux autres parallèlement, puis la dernière étape d'entrainement encore non réalisée, ou encore avec mise en œuvre de trois étapes parallèlement puis deux étapes parallèlement, etc., en fonction des ressources de calculs (i.e. informatiques) nécessaires auxdits entrainement disponibles.

Il est à noter par ailleurs qu'un autre ensemble de modèles de détection distincts pourrait être utilisé à la place des cinq modèles DNF, DCT, SSP, CLIP et NF de l'exemple de la figure 3. Par exemple, six modèles pourraient être entrainés séparément en ajoutant également l'entrainement du modèle DINO d'autodistillation sans étiquette, tel que décrit par M. Oquab dans l'article de 2023 intitulé « DINOv2: Learning Robust Visual Features without Supervision *».*

A titre d'alternative, le modèle DINO pourrait être utilisé à la place de l'un cinq modèles précités DNF, DCT, SSP, CLIP et NF.

La figure 4 illustre à présent l'utilisation de ces modèles entrainés pour le deuxième ensemble 46 d'étapes d'entrainement aboutissant à l'obtention O_M_E d'un métamodèle entrainé M_E.

Tout d'abord le deuxième ensemble 46 d'étapes d'entrainement comprend une sous-étape 130 de récupération du deuxième ensemble E₂ d'images d'entrainement, stocké au sein du module de stockage 12 de la figure 1.

Le deuxième ensemble E₂ d'images d'entrainement est optionnellement et avantageusement distinct du premier ensemble E₁ d'entrainement utilisé lors de l'ensemble 44 d'étapes précédentes d'entrainement séparés des modèles distincts de détection tel que discuté précédemment en relation avec la figure 3.

En complément optionnel, ledit deuxième ensemble E₂ d'images d'entrainement est l'ensemble d'images d'entrainement Synthbuster.

Le deuxième ensemble 46 d'étapes d'entrainement comprend ensuite une étape 132 de compression de chaque image du deuxième ensemble d'images d'entrainement, selon un taux de compression sélectionné aléatoirement au sein de ladite liste de taux de compression prédéterminés (comprenant notamment l'ensemble de taux de compression suivant : 40%, 50%, 60%, 70% et 96%).

A l'issue de la sous-étape 132, on obtient selon la sous-étape 134, un ensemble E_{2_}C d'images d'entrainement compressées aléatoirement.

Puis selon une étape 136 d'application, chacun desdits au moins cinq modèles entrainés, est appliqué à chaque image compressée dudit deuxième ensemble d'images d'entrainement.

Selon le même exemple que celui de la figure 3, le modèle DNF entrainé obtenu à l'issue de l'ensemble 44 d'étapes d'entrainement de la figure 3 est donc appliqué 136 à chaque image compressée dudit deuxième ensemble d'images d'entrainement compressées, pour fournir en sortie, selon l'étape 138, un logit DNF associé à chaque image compressée dudit deuxième ensemble d'images d'entrainement.

Similairement, le modèle DCT entrainé obtenu à l'issue de l'ensemble 44 d'étapes d'entrainement de la figure 3 est donc appliqué 136 à chaque image compressée dudit deuxième ensemble d'images d'entrainement compressées, pour fournir en sortie, selon l'étape 140, un logit DCT associé à chaque image compressée dudit deuxième ensemble d'images d'entrainement.

Toujours similairement, le modèle SSP entrainé obtenu à l'issue de l'ensemble 44 d'étapes d'entrainement de la figure 3 est donc appliqué 136 à chaque image compressée dudit deuxième ensemble d'images d'entrainement compressées, pour fournir en sortie, selon l'étape 142, un logit SSP associé à chaque image compressée dudit deuxième ensemble d'images d'entrainement.

Encore similairement, le modèle CLIP entrainé obtenu à l'issue de l'ensemble 44 d'étapes d'entrainement de la figure 3 est donc appliqué 136 à chaque image compressée dudit deuxième ensemble d'images d'entrainement compressées, pour fournir en sortie, selon l'étape 144, un logit CLIP associé à chaque image compressée dudit deuxième ensemble d'images d'entrainement.

Enfin, de manière similaire, le modèle NF entrainé obtenu à l'issue de l'ensemble 44 d'étapes d'entrainement de la figure 3 est donc appliqué 136 à chaque image compressée dudit deuxième ensemble d'images d'entrainement compressées, pour fournir en sortie, selon l'étape 144, un logit CLIP associé à chaque image compressée dudit deuxième ensemble d'images d'entrainement.

Puis selon l'étape 148, un métamodèle entrainé M_E est obtenu, ce métamodèle entrainé M_E correspondant à un outil d'apprentissage O_A automatique (de l'anglais *machine learning*) entrainé en utilisant, en entrée, pour chaque image compressée dudit deuxième ensemble d'images d'entrainement, lesdits logits correspondants de sortie desdits au moins cinq modèles entrainés. Autrement dit, l'outil d'apprentissage O_A est entrainé avec au moins cinq fois plus d'entrées qu'il n'y a d'image dans le deuxième ensemble E₂ d'images d'entrainement, une image dudit deuxième ensemble E₂ d'images d'entrainement étant associée à au moins cinq entrées logit distinctes 138, 140, 142, 144 et 146.

Selon une première option, ledit outil d'apprentissage O_A automatique est un modèle de renforcement appelé boosting de gradient. Selon une deuxième option, ledit outil d'apprentissage O_A automatique est une forêt d'arbres de décision (de l'anglais *Random Forest*)*.*

A l'issue de l'étape 148, le métamodèle M_E est entrainé lorsque l'ensemble des images dudit deuxième ensemble E₂ d'images d'entrainement a été utilisé, de sorte que l'utilisation du métamodèle entrainé M_E atteigne un taux de réussite prédéterminé, par exemple de l'ordre de 91% pour reconnaitre les images dudit deuxième ensemble E₂ d'images d'entrainement qui sont bien des *deepfake* (i.e. générée ou falsifiée via une intelligence artificielle) de celles qui ne le sont pas, la « vérité » associée à chacune de ces images d'entrainement étant connue.

L'homme du métier comprendra que l'invention ne se limite pas aux modes de réalisation décrits, ni aux exemples particuliers de la description, les modes de réalisation et les variantes mentionnées ci-dessus étant propres à être combinés entre eux pour générer de nouveaux modes de réalisation de l'invention.

La présente invention permet ainsi de combiner plusieurs détecteurs (i.e. modèles distincts de détection) complémentaires, par exemple la combinaison des au moins cinq modèles DNF, DCT, SSP, CLIP et NF précités en se basant sur leur confiance par instance (i.e. par image) afin de retenir la prédiction la plus confiante et tire profit, en terme de robustesse, de la compression des ensemble d'images d'entrainement, avantageusement distincts, l'un étant dédié à l'entrainement séparé des détecteurs et l'autre à l'entrainement du métamodèle en tant que tel.

Un tel métamodèle permet de tirer profit des performances de chacun des détecteurs (e.g. lesdits au moins cinq modèles DNF, DCT, SSP, CLIP et NF), tout en réduisant les points faibles pour améliorer globalement la performance de prédiction (i.e. de détection) du fait qu'une image est générée ou non via une intelligence artificielle.

Par rapport à chaque détecteur pris séparément, la solution proposée permet d'avoir une meilleure qualité de détection des images authentiques versus *deepfake.* Par exemple, à titre de comparaison, le modèle DNF est performant seul à 84%, le modèle DCT est performant seul à 76%, le modèle SSP est performant seul à 79%, le modèle CLIP est performant seul à 88%, et le métamodèle selon la présente invention est performant à 91%.

## Revendications

1. Procédé (40) de détection d'au moins une image générée par intelligence artificielle, le procédé étant mis en œuvre par un dispositif électronique de détection d'au moins une image générée par intelligence artificielle, et comprenant :
- une phase (42) d'entrainement comprenant les étapes suivantes :
- entrainement séparé (44) d'au moins cinq modèles distincts de détection d'au moins une image générée par intelligence artificielle, en utilisant, pour chacun desdits entrainements séparés desdits au moins cinq modèles distincts, un même premier ensemble d'images d'entrainement, chaque image dudit premier ensemble d'images d'entrainement étant, avant d'être utilisée en entrée de chacun desdits au moins cinq modèles distincts, compressée selon un taux de compression sélectionné aléatoirement au sein d'une liste de taux de compression prédéterminés ;
- compression (132) de chaque image d'un deuxième ensemble (E₂) d'images d'entrainement, selon un taux de compression sélectionné aléatoirement au sein de ladite liste de taux de compression prédéterminés ;
- application (136) de chacun desdits au moins cinq modèles entrainés, à chaque image compressée dudit deuxième ensemble d'images d'entrainement, et obtention, en sortie de chacun desdits au moins cinq modèles entrainés, d'un logit associé ;
- obtention (148) d'un métamodèle entrainé (M_E) correspondant à un outil d'apprentissage (O_A) automatique entrainé en utilisant, en entrée, pour chaque image compressée dudit deuxième ensemble d'images d'entrainement, lesdits logits correspondants de sortie desdits au moins cinq modèles entrainés ;
- une phase (48) d'inférence appliquant, ledit métamodèle entrainé, à une image test d'entrée et propre à fournir, en sortie, un résultat de détection classant ladite image test comme générée par intelligence artificielle ou non.

2. Procédé (40) de détection selon la revendication 1, dans lequel chacune des images dudit premier ensemble d'images d'entrainement et dudit deuxième ensemble d'images d'entrainement est au format JPEG, et dans lequel ladite liste de taux de compression comprend l'ensemble de taux de compression suivant : 40%, 50%, 60%, 70% et 96%.

3. Procédé (40) de détection selon la revendication 1 ou 2, dans lequel lesdits au moins cinq modèles distincts de détection d'au moins une image générée par intelligence artificielle appartiennent au groupe comprenant au moins :
- le modèle DNF basé sur la caractéristique de bruit de diffusion ;
- le modèle SSP basé sur un patch simple et unique ;
- le modèle DCT basé sur la transformée en cosinus discret ;
- le modèle CLIP basé sur un pré-entraînement contrastif langage-image ;
- un modèle NF sans extraction de caractéristique ;
- un modèle DINO d'autodistillation sans étiquette.

4. Procédé (40) de détection selon l'une quelconque des revendications précédentes, dans lequel ledit premier ensemble d'images d'entrainement et ledit deuxième ensemble d'images d'entrainement sont distincts.

5. Procédé (40) de détection selon la revendication 4, dans lequel ledit premier ensemble d'images d'entrainement est l'ensemble d'images d'entrainement Genlmage.

6. Procédé (40) de détection selon la revendication 4 ou 5, dans lequel ledit deuxième ensemble d'images d'entrainement est l'ensemble d'images d'entrainement Synthbuster.

7. Procédé (40) de détection selon l'une quelconque des revendications précédentes, dans lequel ledit outil d'apprentissage automatique est un modèle de renforcement appelé boosting de gradient.

8. Procédé (40) de détection selon l'une quelconque des revendications précédentes, dans lequel ledit outil d'apprentissage automatique est une forêt d'arbres de décision.

9. Programme comportant des instructions logicielles qui, lorsqu'elles sont exécutées par un ordinateur, mettent en œuvre un procédé de détection d'au moins une image générée par intelligence artificielle selon l'une quelconque des revendications précédentes.

10. Dispositif électronique (10) de détection d'au moins une image générée par intelligence artificielle, le dispositif électronique (10) étant configuré pour mettre en œuvre un procédé selon l'une quelconque des revendications 1 à 8.
